# EUROPEAN PATENT APPLICATION

(11) **EP 3 617 982 A1**
(43) Date of publication of application: **04.03.2020**
(21) Application number: 19193945.3
(22) Date of filing: 27.08.2019
(51) Int. Cl.: G06Q 30/06, G06Q 20/12, G06Q 20/34, G06Q 20/22

(54) **SYSTEMS AND METHODS PROVIDING AUTOFILL THROUGH A VIRTUAL KEYBOARD**

(30) Priority: 29.08.2018 US 201816116194
(71) Applicant: Capital One Services, LLC, McLean, Virginia 22102 (US)
(72) Inventor: SOKOL, Brian Patrick, Louisville, KY Kentucky 40223 (US); CRAIN, William Michael, Hoover, AL Alabama 35226 (US); SKINNER, Logan Austin, Daphne, AL Alabama 36526 (US); GUAN, Jonathan, Cupertino, CA California 95014 (US); CARR, Reilly, Royal Oak, MI Michigan 48073 (US); NGUYEN, Vu, Pittsburgh, CA California 94565 (US); DE GANON, Matthew, Hartsdale, NY New York 10530 (US); KRESGE, James, Richmond, VA Virginia 23233 (US); TUCKER, Jacob Michael, Wildwood, MO Missouri 63021 (US); MORETON, Paul Young, Glen Allen, VA Virginia 23059 (US)
(74) Representative: Leonhard, Frank Reimund

(57) **Abstract**

Disclosed is a user device (110). The user device (110) comprises one or more inputs, one or more processors, and a memory. The memory is in communication with the one or more inputs and the one or more processors, and includes a first application (114), a second application (116), an autofill virtual keyboard (112), and instructions that, when executed, cause the one or more processors to: receive (202, 302, 502), at the one or more inputs, a user selection of the autofill virtual keyboard (112); detect (206, 308, 504), with the first application (114), one or more fields and one or more field names associated with a page displayed by the second application (116), each field name corresponding to one of the one or more fields; send (210, 314, 508), with a first processor of the one or more processors, the one or more field names to a second processor associated with an external device; receive (208, 310, 506), at the autofill virtual keyboard (112), a user selection to fill the one or more fields; receive (224, 328, 510), at the first application (114), user data associated with the one or more field names from the second processor; assign, by the first processor, a portion of the user data to each of the one or more field names; provide, with the first application (114), each portion of the user data and the respective field name to the autofill virtual keyboard (112); and populate (226, 332, 512), with the autofill virtual keyboard (112), each of the one or more fields with the respective portion of user data.

## Description

The presently disclosed subject matter relates generally to providing autofill through a virtual keyboard and, more particularly, to systems and methods for allowing autofill of payment information through a virtual keyboard associated with an application and implemented on a user device.

E-commerce represents a significant portion of consumer sales. When consumers shop online, they select items for purchase, loading them into e-carts, then proceed to checkout and purchase. During checkout, consumers are prompted to enter their payment and other personal information to process the transaction.

Traditional methods require customers to directly enter their payment information. However, these methods are associated with cart abandonment, i.e., consumers failing to make purchases after loading their carts. Studies show cart abandonment rates at up to 60% once consumers reach the checkout process. This can be a particular issue on mobile devices, where entering payment and personal information may be particularly difficult (e.g., smaller screens, smaller keyboards, and limited time). Accordingly, there is a need for an improved method for providing autofill of payment information.

Within mobile devices, virtual keyboards provide a means for users to input text while writing emails and texts on their mobile phones. Some systems allow customized keyboards, such as "emojis."

Certain aspects of the present disclosure leverage virtual keyboards to improve data entry. In some cases, certain implementations provide a one-click checkout experience across merchants, websites, and applications through the use of virtual keyboards. Some implementations provide for dynamically generated tokenized payment at checkout on mobile devices.

**A problem to be solved** by the invention is to improve the usability or convenience for a user when inputting data on a user device during a check out process while maintaining a high security level.

**The problem is solved** by a user device according to claim 1 and a method according to claim 7.

Aspects of the disclosed technology include systems and methods for providing autofill of payment information through a virtual keyboard implemented on a user device. Consistent with the disclosed embodiments, the systems and methods may utilize one or more user devices, processors, web servers, virtual keyboards, and applications. In some cases, certain systems and methods may include a processor receiving an indication of a user selection of the virtual keyboard from a user device. The processor may output a request to the user device for user identification data. The processor may receive the user identification data from the user device, which verifies the user identification data corresponds to a user account. The processor may receive, from the user device, one or more field names corresponding to one or more fields of a page displayed on the user device. The processor may output for transmission user data associated with the one or more field names to the virtual keyboard. The virtual keyboard may then automatically fill the fields with the user data.

Further features of the present disclosure, and the advantages offered thereby, are explained in greater detail hereinafter with reference to specific embodiments illustrated in the accompanying drawings, wherein like elements are indicated be like reference designators.

Reference will now be made to the accompanying drawings, which are not necessarily drawn to scale, and which are incorporated into and constitute a portion of this disclosure, illustrate various implementations and aspects of the disclosed technology and, together with the description, serve to explain the principles of the disclosed technology. In the drawings:
- FIG. 1: is a diagram of an example environment that may be used to implement one or more example embodiments of the present disclosure.
- FIG. 2: is a timing diagram of providing autofill of payment information on a user device, according to an example embodiment of the invention.
- FIG. 3: is a timing diagram of providing autofill of payment information through a virtual keyboard, according to an example embodiment of the invention.
- FIG. 4: is a flowchart of a method for providing autofill of payment information through a virtual keyboard, according to an example embodiment of the invention.
- FIG. 5: is a flowchart of a method populating payment information by an autofill virtual keyboard, according to an example embodiment of the invention.
- FIG. 6: is a block diagram of an example computer system that may implement certain aspects of the present disclosure.

Some implementations of the disclosed technology will be described more fully with reference to the accompanying drawings. This disclosed technology may, however, be embodied in many different forms and should not be construed as limited to the implementations set forth herein. The components described hereinafter as making up various elements of the disclosed technology are intended to be illustrative and not restrictive. Many suitable components that would perform the same or similar functions as components described herein are intended to be embraced within the scope of the disclosed electronic devices and methods. Such other components not described herein may include, but are not limited to, for example, components developed after development of the disclosed technology.

It is also to be understood that the mention of one or more method steps does not preclude the presence of additional method steps or intervening method steps between those steps expressly identified. Similarly, it is also to be understood that the mention of one or more components in a device or system does not preclude the presence of additional components or intervening components between those components expressly identified.

In an example scenario, a user selects a virtual keyboard on a user device. The user device could be, for example, a smartphone and the virtual keyboard could be associated with an application on the smartphone (e.g. the keyboard communicates with an application to provide the keyboard functionality). A user selects the virtual keyboard, and a processor associated with a web server receives an indication of the user selection of the virtual keyboard. To verify the user, the processor requests user identification data from the user device. The user device responds by sending the requested user identification data to the processor (e.g., through the application on the smartphone). The processor verifies that the user identification data corresponds to an existing user account. The user device also sends to the processor one or more field names corresponding to the one of more fields of a page displayed on the user device (e.g., through the application). The processor outputs, to the virtual keyboard, user data associated with the one or more field names. The virtual keyboard then uses the user data received from the processor to autofill (e.g., inject data into) the fields of the page displayed on the user device. When the page is a payment page, the user merely needs to select the virtual keyboard, which autofills the payment fields, and click a button representing an authorization to submit the payment.

Reference will now be made in detail to exemplary embodiments of the disclosed technology, examples of which are illustrated in the accompanying drawings and disclosed herein. Wherever convenient, the same references numbers will be used throughout the drawings to refer to the same or like parts.

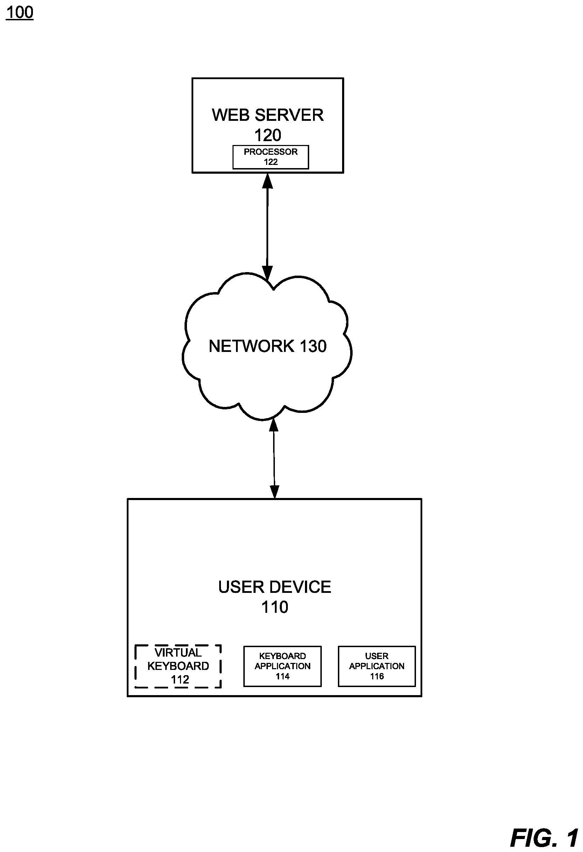

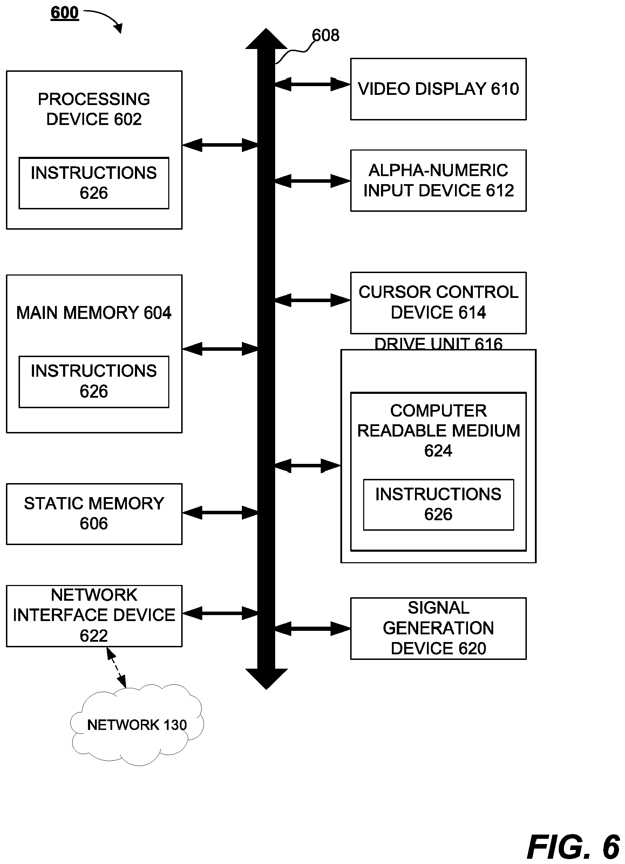

FIG. 1 shows an example environment 100 that may implement certain aspects of the present disclosure. The components and arrangements shown in FIG. 1 are not intended to limit the disclosed embodiments. As shown in FIG. 1, in some implementations, the environment 100 includes one or more user devices 110 implementing one or more virtual keyboards 112, one or more keyboard applications 114, and one or more user applications 116, a web server 120 which includes one or more processors 122, and a network 130. As non-limiting examples, the user device 110 may be a personal computer, a smartphone, a laptop computer, a tablet, or other personal computing device. The network 130 may include a network of interconnected computing devices (e.g., the Internet or a local network). The web server 120 may include one or more physical or logical devices (e.g., servers). The user device 110 may run one or more keyboard applications 114 and the related output(s) of the one or more keyboard applications 114. The user device 110 may also run and display one or more user applications 116 (e.g., web browser, merchant application) and the related output(s) of the one or more user applications 116. An example computer architecture that may be used to implement one or more of the user device 110 and the web server 120 is described below with reference to FIG. 6.

In certain implementations according to the present disclosure, the user device may include one or more keyboard applications 114 associated with the one or more virtual keyboards 112. A user may execute user application 116 and select a text field therein, prompting virtual keyboard selection. The user device 110 may receive an indication of a user selection of the virtual keyboard 112 to the processor 122 through the network 130. In some embodiments, the user device 110 may send, to the processor 122 through the network 130, an indication of a user navigation to the virtual keyboard 112. The user device 110 may receive a request for user identification from the processor 122. In some embodiments, in response to receiving a user selection of the autofill virtual keyboard, the keyboard application 114 may prompt the user for the user identification data. According to some embodiments, the keyboard application 114 may receive, from the user, one or more of a username and password, fingerprint data, optical data, and/or the like. Prior to transmission to web server 120, the user identification data may be used to log the user onto the virtual keyboard 112. The keyboard application 114 may transmit the user identification data to an external device (e.g., an application server), which may confirm the user's identification. The transmission of the user identification data from the keyboard application 114 to the external device may involve encrypted communication. In response, the keyboard application 114 may receive an indication of authentication from the external device. The keyboard application 114 may then identify the user. In some cases, a user may have previously logged-into keyboard application 114. Accordingly, the user identification data may have already been provided and/or confirmed prior to selecting virtual keyboard 112.

According to some embodiments, the user device 110 may detect one or more fields associated with a page of application 116. One or more field names of the one or more fields may correspond to one or more field names displayed on a page on the user device 110. The user device 110 may send, through the network 130, one or more field names to web server 120. Web server 120 may provide user data associated with the one or more field to the user device 110. The virtual keyboard 112 may receive an indication of a user selection to fill the one or more fields, and fill the one or more fields with the user data received from web server 120. In some embodiments, keyboard application 114 may be configured to detect the one or more fields, receive the user data from the processor 122, and provide the user data to the virtual keyboard 112. In some cases, the user data may include payment information (e.g., a virtual card number and expiration date), address information (e.g., a billing address), and name information (e.g., a user name).

In some embodiments, the user device 110 may also detect a merchant identifier associated with a page displayed on the user device 110, the merchant identifier corresponding to a merchant. The user device 110 may send, through the network 130, an indication of the merchant identifier to the processor 122. The user data received from web server 120 may be related to the merchant. For example, the user data may include payment information corresponding to a virtual payment card associated with the merchant (e.g., a virtual card of the user's account that is tied to purchases at the merchant). In cases where no virtual payment card associated with the merchant exists, the user device 110 may receive, from the processor 122, payment information from a newly generated virtual payment card. In some embodiments, the user device 110 may request generation of a new virtual payment card from web server 120 (e.g., through keyboard application 114) even if a virtual card is already associated with the merchant. The request for a new virtual card may include, as non-limiting examples, a spending limit, an expiration date, a unique spending identifier, and/or the like. The keyboard application 114 may output, for transmission, the indication of the user request to web server 120. In some embodiments, the keyboard application 114 may transmit the merchant identifier to the external device.

Web server 120 may receive, from the user device 110 and through the network 130, an indication of a user selection of (e.g., a user navigation to) the virtual keyboard 112. The processor 122 may output, through the network 130 and to the user device 110, a request for user identification data. The processor 122 may receive, through the network 130 and from the user device 110, the user identification data. The user identification data may include user login credentials, user fingerprint data, user optical data, and/or the like. After receipt of the user identification data, the processor 122 may verify that the user identification data corresponds to a user account. The processor 122 may perform verification by comparing the received user identification data corresponding to a user account to stored user identification data corresponding to the same user account. The stored data may be located on web server 120, or it may be located on an external device capable of verifying the user identity. The processor 122 may receive, through the network 130 and from the user device 110, one or more field names corresponding to the one or more fields, and provide user data for filling out the one or more fields. In some cases, the fields may include payment fields, and the user data may include payment information including, for example, a virtual card number.

According to some embodiments, the processor 122 may receive, through the network 130 and from keyboard application 114, an indication of a user input to generate a new virtual card. The user input may include an indication of at least one of a spending limit, an expiration date, a unique spending identifier, and/or the like. In some embodiments, the processor 122 may generate a virtual payment card based on the user input. In some embodiments, after the processor 122 determines the virtual payment card has been established, the processor 122 transmits payment information associated with the virtual payment card to the user device 110.

In some embodiments, the processor 122 may receive, through the network 130 and from the user device 110, an indication of a merchant identifier associated with the page, wherein the merchant identifier corresponds to a merchant. The virtual payment card data provided to user device 110 may be associated with the merchant identifier and/or the user account. In other embodiments, may generate a new virtual payment card upon determining that a virtual payment card corresponding to the merchant identifier has not been established for the user account.

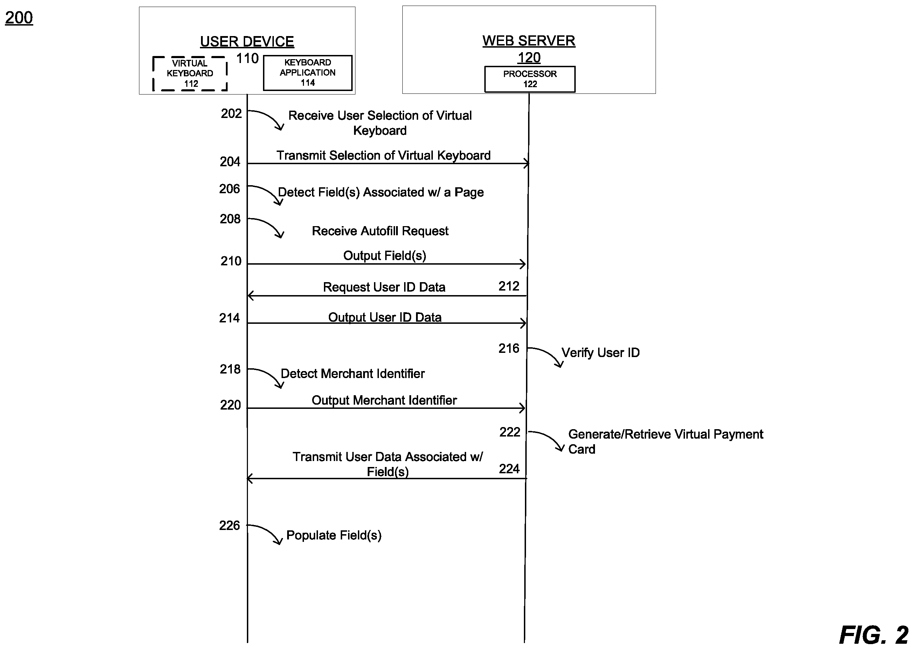

FIG. 2 is a timing diagram of providing autofill of payment information on a user device according to an example embodiment. According to some embodiments, at 202, the user device 110 receives an indication of a user selection of the virtual keyboard 112. The virtual keyboard 112 may be selected from amongst a plurality of virtual keyboards located (e.g., installed) on the user device 110. In some embodiments, the virtual keyboard 112 may be installed as a default keyboard not requiring selection by the user. At 204, the user device 110 transmits the user selection of the virtual keyboard 112 to the web server 120. The user device 110 detects the fields associated with a page displayed on the user device 110, at 206. In some embodiments, keyboard application 114 may detect the fields by reading the code (e.g., HTML code) associated with the page and determining input fields based on markers within the code. In some instances, a page may have field tags embedded therein, and the keyboard application 114 may identify the field tags within the page. The detected fields may include corresponding field names associated with input boxes, fields, buttons, selections on the page, and/or the like. For example, the field names may include a physical address, customer first and last name, payment information, and/or the like.

At 208, the user device 110 may receive an autofill request from a user (e.g., an input from a user device). According to some embodiments, the autofill request may be provided as an option by the virtual keyboard 112. At 210, the user device 110 outputs the detected fields to the web server 120.

At 212, the web server 120 requests user identification data from the user device 110. The user device 110 receives the request for user identification data from the web server 120. The user identification data may include a username and a password, fingerprint data, optical data, face recognition data, and/or the like. In response, at 214, the user device 110 outputs, for transmission, the user identification data to the web server 120. In some embodiments, the user device 110 may transmit user identification data to the web server 120 prior to receiving a request (e.g., transmitted along with the indications of virtual keyboard selections fields). According to some embodiments, the user device 110 may provide the user identification data to the web server without an immediately preceding user input. For instance, a user may select an option on the user device 110 (e.g., within keyboard application 114) to automatically provide the user identification data when prompted.

At 216, the web server 120 verifies the user identification data by confirming the existence of a corresponding user account. Verification may involve the processor 122 comparing, for at least a partial match, the user identification data with user account data. The user account data may be stored on the web server 120 or retrieved from another device associated with the web server 120.

At 218, the user device 110 detects the merchant identifier corresponding to a page displayed on the user device 110. The merchant identifier may correspond to a merchant. For example, an online retailer may have a unique merchant identifier corresponding to the page displayed on the user device. The user device 110 outputs, for transmission, the merchant identifier to the web server 120, at 220. In some embodiments, the merchant identifier may be detected along with the field names and outputted, for transmission, along with the field names (e.g., through tags or code parsing). In some instances, an application identifier of application 116 may be determined; the application identifier may correspond to a particular merchant or merchant identifier. In some cases, application 116 may include a web browser, and a URL of a web page may be used to determine the merchant identifier. In some embodiments, one or more of an internet protocol (IP) address (e.g., of the web page, a website server, and/or an application server), and application name of application 116, registry information, customer input, and/or the like may be used to determine the merchant identifier. After receiving the merchant identifier at 222, the web server 120 may either retrieve or generate the virtual payment card, e.g., a virtual payment card associated with the merchant. For example, when a virtual payment card associated with the merchant exists, the web server 120 will retrieve virtual payment card data (e.g., account number, cardholder name, and expiration date) of the virtual payment card associated with a user account. Meanwhile, when no virtual payment card is associated with the merchant, the web server 120 generates a virtual payment card to be associated with the merchant. In some implementations, the autofill of fields may not be tied to a specific merchant (e.g., a general virtual payment card may be used for all merchants). The generated virtual payment card may be stored by the web server 120 for later retrieval. Therefore, in some cases, the merchant identifier may not be acquired and/or transmitted.

At 224, the web server 120 transmits user data associated with the fields of the page to the user device 110. The transmitted user data associated with the fields may be retrieved from a virtual payment card (e.g., a virtual payment card in a virtual wallet of the user device 110) and/or may be stored on the web server 120 or another device associated with the web server 120. At 226, the user device 110 populates the fields associated with the page with the user identification data received from the web server 120.

In some embodiments, populating the fields may be accomplished on a field-by-field basis (e.g., the user selects the fields one at a time and the keyboard application 114 performs an autofill of each field in accordance with each user selection). More specifically, populating the fields on a field-by-field basis may involve the following: a user selection of a field; detection of the user selection by the virtual keyboard 112; transmitting, by the keyboard application 114 to the web server 120, the user selected field; receiving, by the keyboard application 114 and from the web server 120, data corresponding to the selected field; receiving, by the virtual keyboard 112, a user selection to accept an autofill of the field with the corresponding data; and performing, by the keyboard application 114, an autofill of the field. According to some embodiments, a user may select an autofill of a field from a list presented by the virtual keyboard 112 of field entries (e.g., field entries retrieved from web server 120). For example, virtual keyboard 112 and/or keyboard application 114 may store (e.g., temporarily store) a plurality of user identification data corresponding to different fields. When a field is selected, the user may then select the appropriate user identification data (e.g., the user's name or credit card number) and/or the appropriate field type (e.g., "Name" or "CCN"). The virtual keyboard 112 may then autofill the selected field with the corresponding selected user identification data.

As will be understood by one of ordinary skill, in some example methods, various portions of the method may be combined or ordered in varying ways. For example, indications of the user selection of the virtual keyboard 112 and the detected fields may be sent together.

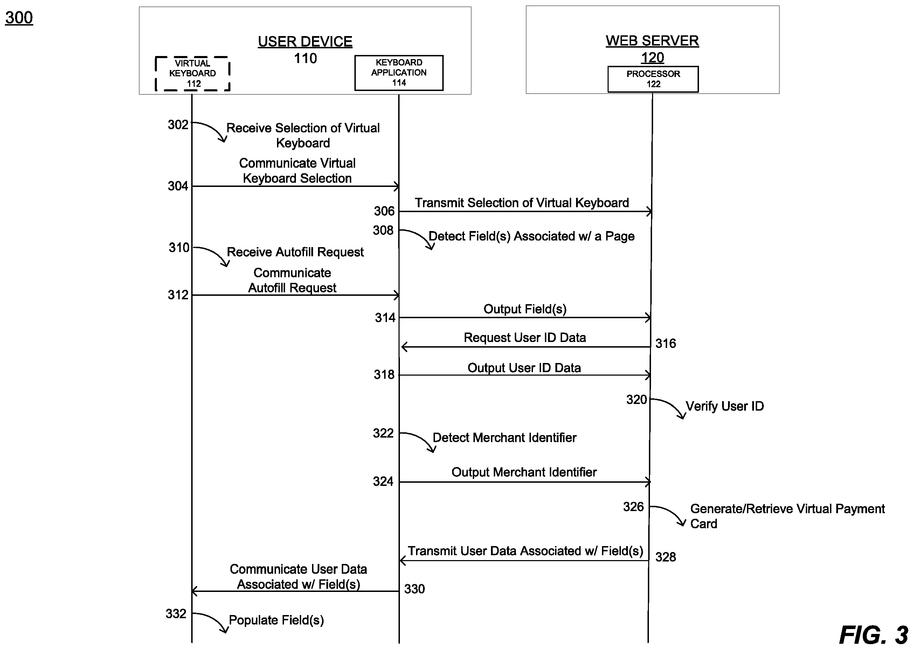

FIG. 3 is a timing diagram of providing autofill of payment information according to an example embodiment. According to some embodiments, the virtual keyboard 112 is associated with a keyboard application 114 implemented on the user device 110. At 302, the virtual keyboard 112 receives an indication of a user selection of the virtual keyboard 112, similar to 202 described above. At 304, the virtual keyboard 112 communicates the virtual keyboard selection with the keyboard application 114. At 306, the keyboard application 114 outputs for transmission, the selection of the virtual keyboard to the processor 122. At 308, the keyboard application 114 detects fields associated with the page displayed on the user device. At 310, by the virtual keyboard 112 may receive a user request to autofill the fields. 306, 308, and 310 may be substantially similar to 204, 206, and 208, respectively, described above with reference to FIG. 2. At 312, the virtual keyboard 112 communicates the autofill request to the keyboard application 114.

In response, at 314, the keyboard application 114 outputs, for transmission, the fields associated with the page to the processor 122 of web server 120. At 316, the processor 122 requests user identification data from the keyboard application 114. At 318, the keyboard application 114 outputs user identification data to the processor 122. After receipt of the user identification data, the processor 122 verifies the user identification, at 320. At 322, the keyboard application 114 detects the merchant identifier and, at 324, the keyboard application 114 outputs, for transmission, the merchant identifier to the processor 122. At 326, the processor 122 generates or retrieves a virtual payment card, and transmits user data associated with the fields from the page to the keyboard application 114 at 328. 314-328 may be substantially similar to 210-224 described above with reference to FIG. 2.

At 330, the keyboard application 114 communicates the data associated with the fields to the virtual keyboard 112. The virtual keyboard 112 populates the fields on the page with the data received from the processor 122 and through the keyboard application 114, at 332. In some embodiments, after the virtual keyboard populates the fields at 332, the user may click an option to transmit payments information, concluding the transaction.

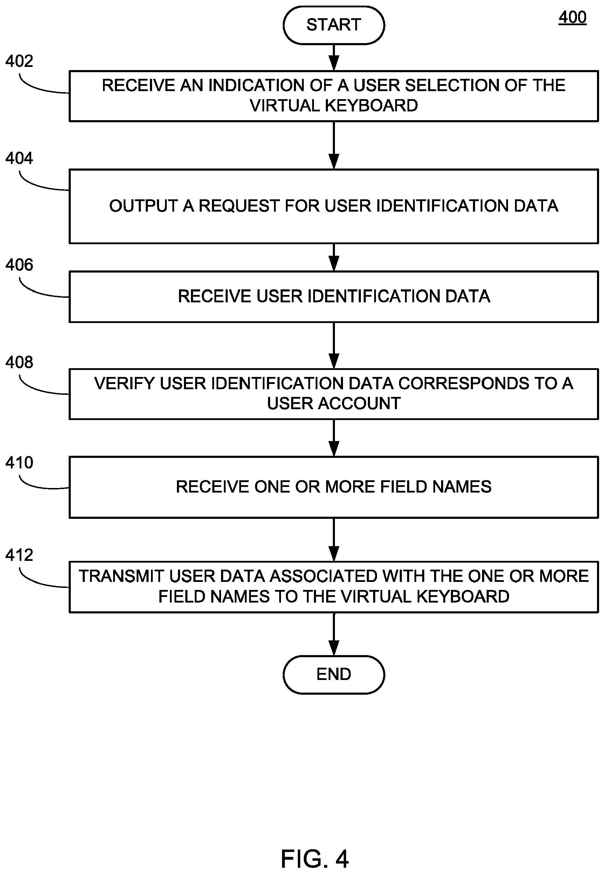

FIG. 4 is a flow chart of a method for providing autofill of payment information through a virtual keyboard implemented on a user device according to an example embodiment. As a non-limiting example, the method may be performed by a web server 120. According to some embodiments, a user may select a virtual keyboard 112 on her user device 110. In some embodiments, the virtual keyboard 112 is associated with a keyboard application 114 implemented on the user device 110. The keyboard application 114 may be configured to receive the user data from the virtual keyboard 112. At 402, the web server 120 receives the indication of the user selection of a virtual keyboard 112. In response, at 404, the web server 120 outputs a request to the user device 110 for user identification data. The web server 120 receives the user identification data from the user device 110 at 406. At 408, the web server 120 verifies that the user identification data corresponds to a user account. In some embodiments, verifying the user identification data may involve comparing, for at least a partial match, the user identification data with stored user account data. The stored user account data may be located on the web server 120 or may be located on a device associated with the web server 120. In some cases, web server 120 may utilize a separate, verification server to verify the user's identification data.

At 410, the web server 120 receives one or more field names from the user device 110. The field names may correspond to fields of a page displayed on the user device 110 (e.g., a page of application 116). In some embodiments, the web server 120 may receive, from the user device 110, an indication of a merchant identifier associated with the page displayed on the user device 110. The web server 120 may verify that the merchant identifier corresponds to a merchant prior to transmitting user data associated with the one or more field names. Verifying the merchant identifier may involve comparing the merchant identifier with stored merchant identifier data. At 412, the web server 120 transmits, to the user device 110, user data to the user device 110. For example, the user data may include payment information of a virtual payment card associated with the merchant (e.g., a user's virtual payment card that is associated with the merchant).

In some embodiments, the web server 120 may receive an indication of a user input. For example, the user input may indicate a request, by the user, to generate a virtual payment card. The user input may include one or more of a spending limit, an expiration date, a unique spending identifier, and/or the like. According to some embodiments, the web server 120 may generate a virtual payment card based on the user input. In some embodiments, each virtual payment card is associated with a specific merchant (e.g., associated with a specific merchant identifier). For example, when the virtual payment card is generated, the virtual payment card may be associated with a merchant identifier of a page displayed on the user device when requested through the virtual keyboard 112.

In some cases requiring a merchant identifier, the merchant identifier may provide an additional security feature that ensures a payment recipient matches the merchant. That is, as the card information may be automatically loaded based on a detected merchant identifier, card information will not be provided for pages that cannot be determined to belong to the merchant (e.g., spoofed web pages). Further, by tying virtual cards to particular merchants, any leaked card information attempted to be used at a different merchant would be readily identified as potentially fraudulent. Tracking purchases by merchant may also allow enhanced purchase tracking (e.g., the number of purchases, the amount of each purchase), which, in some instances, may help identify purchase patterns indicating fraud. In some cases, tying virtual cards to particular merchants or groups of merchants may provide enhanced budgeting capabilities (e.g., each card has a predetermined limit). In some cases, tying virtual cards to particular merchants, may help to organize transactions. In some implementations, through tying particular merchants to virtual cards may also enable merchant level card controls (e.g., turning a card off/on, setting spending limits, providing date parameters for charges, deleting a virtual card number). Due to particular merchants being tied to particular virtual cards, the specific merchants having any specific set of virtual card information is also easily determinable.

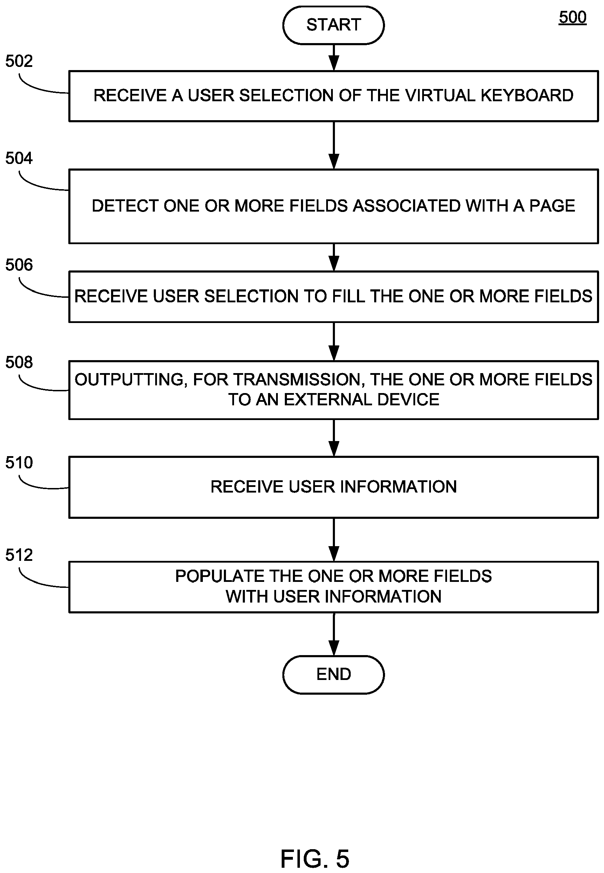

FIG. 5 is a flowchart of a method populating payment information by an autofill virtual keyboard of a user device according to an example embodiment. The method may be performed, for example, by user device 110. In some embodiments, a user navigates to a page in application 116, selects a text field, and then selects virtual keyboard 112 from amongst a plurality of virtual keyboards. At 502, the user device 110 receives the user selection of the virtual keyboard 112. According to some embodiments, in response to receiving the user selection, the keyboard application 114 may prompt the user for user identification data. The user identification data may include a username and a password, fingerprint data, optical data, and/or the like. The user device 110 may transmit the user identification data to an external device for verification. After transmission, the user device 110 may receive an indication of authentication from the external device.

On the user device 110, the page is displayed having one or more field. At 504, the user device 110 detects the one or more fields associated with the page. In some embodiments, the virtual keyboard 112 may detect the one or more fields associated with the page. In other embodiments, the keyboard application 114 associated with the virtual keyboard 112 may detect the one or more fields. According to some embodiments, the user device 110 may also determine a merchant associated with the page (e.g., by determining a merchant identifier corresponding to the merchant). In some embodiments, the keyboard application 114 and/or the virtual keyboard 112 may detect the merchant identifier. At 506, the user device 110 receives an indication of a user selection to autofill the one or more fields. At 508, the user device 110 outputs, for transmission, an indication of the one or more fields to an external device. At 510, the user device 110 receives user information from the external device. The user information may be based on the indication of the one or more fields. For example, if the one or more fields includes fields for a payment card number and billing address, the user information may include payment information. In some embodiments, the keyboard application 114 associated with the virtual keyboard 112 receives the user information from the external device. The user may request generation of a virtual payment card. According to some embodiments, the keyboard application 114 associated with the virtual keyboard 112 receives an indication of a user request to generate a virtual payment card. The user request may include a spending limit, an expiration date, a unique spending identifier, and/or the like. The user device 110 may output, for transmission, the indication of the user request to the external device. At 512, the virtual keyboard 112 populates the one or more fields with user information.

FIG. 6 is a block diagram of an example computer system 600 that may implement certain aspects of the present disclosure. The computer system 600 may include a set of instructions 626 for controlling operation of the computer system 600. In some implementations, the computer system 600 may be connected (e.g., networked) to other machines in a Local Area Network (LAN), an intranet, an extranet, a satellite communications system, or the Internet. The computer system 600 may operate in the capacity of a server or a client machine in a client-server network environment, or as a peer machine in a peer-to-peer (or distributed) network environment. The computer system 600 may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while a single computer system 600 is illustrated, the term "machine" shall also be taken to include any collection of machines (e.g., computers) that individually or jointly execute a set (or multiple sets) of instructions to perform any one or more of the methodologies discussed herein.

The computer system 600 includes a processing device 602, a main memory 604 (e.g., read-only memory (ROM), flash memory, dynamic random-access memory (DRAM) such as synchronous DRAM (SDRAM), etc.), a static memory 606 (e.g., flash memory, static random-access memory (SRAM), etc.), and a secondary memory 616 (e.g., a data storage device), which communicate with each other via a bus 608.

The processing device 602 represents one or more general-purpose processing devices such as a microprocessor, a microcontroller, a central processing unit, or the like. As non-limiting examples, the processing device 602 may be a reduced instruction set computing (RISC) microcontroller, a complex instruction set computing (CISC) microprocessor, a RISC microprocessor, very long instruction word (VLIW) microprocessor, a processor implementing other instruction sets, or one or more processors implementing a combination of instruction sets. The processing device 602 may also be one or more special-purpose processing devices such as an application specific integrated circuit (ASIC), a field programmable gate array (FPGA), a digital signal processor (DSP), network processor, or the like. The processing device 602 is configured to execute the operations for electronically creating and trading derivative products based on one or more indices relating to volatility.

The computer system 600 may further include a network interface device 622, which is connectable to a network 130. The computer system 600 also may include a video display unit 610, i.e., a display (e.g., a liquid crystal display (LCD), a touch screen, or a cathode ray tube (CRT)), an alphanumeric input device 612 (e.g., a keyboard), a cursor control device 614 (e.g., a mouse), and a signal generation device 620 (e.g., a speaker).

The secondary memory 616 may include a non-transitory storage medium 624 on which is stored one or more sets of instructions 626 for the computer system 600 representing any one or more of the methodologies or functions described herein. For example, the instructions 626 may include instructions for implementing an asset tracking device including a power source and power management system or subsystem for a container or a trailer. The instructions 626 for the computer system 600 may also reside, completely or at least partially, within the main memory 604 and/or within the processing device 602 during execution thereof by the computer system 600, the main memory 604 and the processing device 602 also constituting computer-readable storage media.

While the storage medium 624 is shown in an example to be a single medium, the term "storage medium" should be taken to include a single medium or multiple media that store the one or more sets of instructions for a processing device. The term "storage medium" shall also be taken to include any medium that is capable of storing or encoding a set of instructions for execution by the machine that cause the machine to perform any one or more of the methodologies of the disclosure. The term "storage medium" shall accordingly be taken to include, but not be limited to, solid-state memories, and optical and magnetic media.

Throughout the specification and the claims, the following terms take at least the meanings explicitly associated herein, unless the context clearly dictates otherwise. The term "or" is intended to mean an inclusive "or." Further, the terms "a," "an," and "the" are intended to mean one or more unless specified otherwise or clear from the context to be directed to a singular form.

In this description, numerous specific details have been set forth. It is to be understood, however, that implementations of the disclosed technology may be practiced without these specific details. In other instances, well-known methods, structures and techniques have not been shown in detail in order not to obscure an understanding of this description. References to "one embodiment," "an embodiment," "some embodiments," "example embodiment," "various embodiments," "one implementation," "an implementation," "example implementation," "various implementations," "some implementations," etc., indicate that the implementation(s) of the disclosed technology so described may include a particular feature, structure, or characteristic, but not every implementation necessarily includes the particular feature, structure, or characteristic. Further, repeated use of the phrase "in one implementation" does not necessarily refer to the same implementation, although it may.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

While certain implementations of the disclosed technology have been described in connection with what is presently considered to be the most practical and various implementations, it is to be understood that the disclosed technology is not to be limited to the disclosed implementations, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain implementations of the disclosed technology, including the best mode, and also to enable any person skilled in the art to practice certain implementations of the disclosed technology, including making and using any devices or systems and performing any incorporated methods. The patentable scope of certain implementations of the disclosed technology is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

The following example use cases describe examples of particular implementations of user of a virtual keyboard on a user device. These examples are intended solely for explanatory purposes and not limitation. In one case, a user selects a virtual keyboard on her smartphone (e.g., user device 110). After selecting the virtual keyboard, the virtual keyboard prompts the user to enter user identification data (e.g., optical data, fingerprint data, username and password). The user enters her fingerprint data (e.g., the smartphone reads her fingerprint data using a fingerprint scanner), and the smartphone (e.g., via a keyboard application associated with the virtual keyboard) sends the user identification data to the server. The server checks whether the fingerprint data corresponds to a user account. Next, the user visits a store's mobile application and selects numerous items for purchase. At the checkout page of the application, the smartphone displays the store's website including several fields requiring payment information. The keyboard application identifies fields in the checkout page and transmits them to the server. If the user data information corresponds to a user account, the server sends payment data corresponding to the field names to the application. The application communicates the data to the virtual keyboard, which populates the fields with the payment data sent from the server. Thus, the user only needs to click a purchase button to complete the transaction, without having to manually enter the payment information.

In another case, on his tablet (e.g., user device 110), a user visits a store's online website and selects items to purchase via the website. At the checkout page of the store's website, the smartphone displays several fields for payment information. The user selects one of fields for data entry, and selects a virtual keyboard on his tablet. After selecting the virtual keyboard, the virtual keyboard and/or a virtual keyboard application prompts (e.g., through a popup window) the user to enter user identification data (e.g., optical data, fingerprint data, username and password). The user enters his username and password. The tablet (via an application associated with the virtual keyboard) sends the user identification data to the server. The server checks whether the username and password correspond to a user account. The application identifies the fields and identifies a merchant associated with the website. The application transmits field names and a merchant ID to the server. If the username and password correspond to a user account, the server checks to see if a virtual payment card corresponding to the user account and the merchant exists. If the virtual payment card exists, the server transmits payment data from the virtual payment card corresponding to the field names to the application. If no virtual payment card exists, the server generates a virtual payment card for the user account in association with the merchant, and transmits payment data corresponding to the fields to the application. The application then communicates the payment data to the virtual keyboard. The virtual keyboard populates the fields with the payment data sent from the server. Thus, the user only needs to click a link to complete the transaction.

Preferred embodiments of the invention as examples, wherein the number indicated below indicates the number of the respective example.
1. Method of providing autofill of payment information through a virtual keyboard implemented on a user device, the method comprising:
   receiving, by a processor and from the user device, an indication of a user selection of the virtual keyboard;
   outputting, by the processor and to the user device, a request for user identification data;
   receiving, by the processor and from the user device, the user identification data;
   verifying, by the processor, that the user identification data corresponds to a user account;
   receiving, by the processor and from the user device, one or more field names corresponding to one or more fields of a page displayed on the user device; and
   outputting for transmission, by the processor and to the virtual keyboard, user data associated with the one or more field names.
2. Method of example 1, wherein the virtual keyboard is associated with an application implemented on the user device, the application being configured to receive the user data from the processor and provide the user data to the virtual keyboard.
3. Method of example 1 or 2 further comprising:
   receiving, by the processor and from the user device, an indication of a merchant identifier associated with the page, the merchant identifier corresponding to a merchant; and
   transmitting, by the processor and to the user device, payment information of a virtual payment card associated with the merchant.
4. Method of any one of examples 1 to 3 further comprising receiving, by the processor and from the application, an indication of a user input.
5. Method of example 4, wherein the user input comprises an indication of at least one of a spending limit, an expiration date, and a unique spending identifier, and the method further comprises generating a virtual payment card restricted based on the user input, the user data comprising an account number of the virtual payment card.
6. Method of example 4 further comprising generating a virtual payment card, the user data comprising an account number of the virtual payment card.
7. Method of example 6, wherein the virtual payment card is associated with a first merchant identifier.
8. Method of example 7 further comprising verifying, by the processor and before transmitting the user data associated with the one or more field names, the merchant identifier corresponding to a merchant.
9. Method of example 8, wherein verifying the merchant identifier comprises comparing, for a match, the first merchant identifier of the virtual payment card to a second merchant identifier associated with the page.
10. Method of example 6, wherein the processor stores the virtual payment card for later retrieval.
11. Method of populating payment information by an autofill virtual keyboard of a user device, the method comprising:
   receiving a user selection of the autofill virtual keyboard from amongst a plurality of virtual keyboards;
   detecting one or more fields associated with a page;
   outputting, for transmission, the one or more fields to an external device;
   receiving, by the virtual keyboard, an indication of a user selection to fill the one or more fields;
   receiving the payment information from the external device; and
   populating, by the virtual keyboard, the one or more fields with the payment information.
12. Method of example 11, wherein an application associated with the virtual keyboard detects the one or more fields associated with the page.
13. Method of example 11 or 12, wherein an application associated with the virtual keyboard receives the payment information from the external device.
14. Method of any one of examples 11 to 13 further comprising:
   receiving, by an application associated with the virtual keyboard, an indication of a user request to generate a virtual payment card, the indication of the user request comprising at least one of a spending limit, an expiration date, and a unique spending identifier; and
   outputting, for transmission, the indication of the user request to the external device.
15. Method of any one of examples 11 to 14 further comprising, detecting an indication of a merchant identifier associated with the page, the merchant identifier corresponding to a merchant.
16. Method of example 15 further comprising transmitting the merchant identifier to the external device, wherein the payment information is associated with the merchant.
17. Method of any one of examples 11 to 16 further comprising receiving user identification data, wherein the user identification data comprises at least one of a username and a password, fingerprint data, and optical data.
18. Method of example 17 further comprising:
   transmitting the user identification data to the external device; and
   receiving an indication of authentication from the external device.
19. Method of example 17 further comprising prompting, through an application executing on the user device and responsive to receiving the user selection of the autofill virtual keyboard, the user for the user identification data.
20. Method of providing autofill of payment information through a virtual keyboard implemented on a user device, the method comprising:
   receiving, by a processor and from the user device, an indication of a user navigation to the virtual keyboard;
   outputting, by the processor and to the user device, a request for user identification data, the user identification data comprising at least one of a user login credentials, user fingerprint data, and user optical data;
   receiving, by the processor and from the user device, the user identification data;
   verifying, by the processor, that the user identification data corresponds to a user account;
   receiving, by the processor and from the user device, a merchant identifier corresponding to a page displayed on the user device;
   receiving, by the processor and from the user device, one or more field names corresponding to one or more fields of the page displayed on the user device;
   in response to determining that a virtual payment card associated with the merchant identifier and the user account has been established, transmitting, by the processor and to the user device, payment information of the established virtual payment card; and
   in response to determining that a virtual payment card associated with the merchant identifier and the user account has not been established, generating a virtual payment card associated with the merchant identifier and the user account, and transmitting, to the user device, payment information of the generated virtual payment card.

## Claims

1. **User device (110)** comprising:
one or more inputs;
one or more processors; and
memory, in communication with the one or more inputs and the one or more processors, including a first application (114), a second application (116), an autofill virtual keyboard (112), and instructions that, when executed, cause the one or more processors to:
receive (202, 302, 502), at the one or more inputs, a user selection of the autofill virtual keyboard (112);
detect (206, 308, 504), with the first application (114), one or more fields and one or more field names associated with a page displayed by the second application (116), each field name corresponding to one of the one or more fields;
send (210, 314, 508), with a first processor of the one or more processors, the one or more field names to a second processor associated with an external device;
receive (208, 310, 506), at the autofill virtual keyboard (112), a user selection to fill the one or more fields;
receive (224, 328, 510), at the first application (114), user data associated with the one or more field names from the second processor;
assign, by the first processor, a portion of the user data to each of the one or more field names;
provide, with the first application (114), each portion of the user data and the respective field name to the autofill virtual keyboard (112); and
populate (226, 332, 512), with the autofill virtual keyboard (112), each of the one or more fields with the respective portion of user data.

2. User device (110) of claim 1, the instructions further causing the one or more processors to:
detect (218, 322), with the first application (114), a merchant identifier associated with the page; and
send (220, 324), with the first processor, the merchant identifier to the second processor;
wherein the user data comprises payment information associated with the merchant identifier.

3. User device (110) of claim 2, the instructions further causing the one or more processors to:
receive, at the first application (114), a user request to generate a virtual payment card including at least one of a spending limit, an expiration date, or a unique spending identifier; and
send, with the first processor, the user request to the second processor.

4. User device (110) of claim 3, wherein the virtual payment card is associated with the merchant identifier.

5. User device (110) of any one of claims 1 to 4, the instructions further causing the one or more processors to:
prompt, with the first application (114), the user for user identification data in response to receiving the user selection of the autofill virtual keyboard (112);
receive, at the one or more inputs, the user identification data;
send (214, 318), with the first processor, the user identification data to the second processor; and
receive, at the first processor, an authentication from the second processor.

6. User device (110) of claim 5, wherein the user identification data comprises one or more of a username and a password, fingerprint data, or optical data.

7. **Method** to populate user data with an autofill virtual keyboard (112) of a user device (110), the method comprising:
receiving (202, 302, 502), at one or more inputs of the user device (110), a user selection of the autofill virtual keyboard (112);
sending (204, 306), with a first processor, the user selection to a second processor associated with a server;
receiving (212, 316), at the first processor, a request for user identification data from the second processor;
prompting, with a first application (114) associated with the user device (110), a user for the user identification data;
sending (214, 318), with the first processor, the user identification data to the second processor;
receiving, at the first application (114), an authentication from the second processor;
detecting (206, 308, 504), with the first application (114), one or more fields and one or more field names associated with a page displayed by a second application (116) associated with the user device (110), each field name corresponding to one of the one or more fields;
sending (210, 314, 508), with the first processor, the one or more field names to the second processor;
receiving (208, 310, 506), at the autofill virtual keyboard (112), a user selection to fill the one or more fields;
receiving (224, 328, 510), at the first application (114), the user data associated with the one or more field names from the second processor;
assigning, by the first processor, a portion of the user data to each of the one or more field names;
providing, with the first application (114), each portion of the user data and the respective field name to the autofill virtual keyboard (112); and
populating (226, 332, 512), with the autofill virtual keyboard (112), each of the one or more fields with the respective portion of user data.

8. Method of claim 7, further comprising:
determining, with the autofill virtual keyboard (112), that the user is not logged onto the autofill virtual keyboard (112); and
logging the user onto the autofill virtual keyboard (112) with the user identification data.

9. Method of claim 7 or 8, wherein the user identification data comprises at least one of a username and a password, fingerprint data, or optical data.

10. Method of any one of claims 7 to 9, further comprising:
receiving, at the first application (114), a user request to generate a virtual payment card including at least one of a spending limit, an expiration date, or a unique spending identifier; and
sending, with the first processor, the user request to the second processor.

11. Method of claim 10, further comprising:
receiving, at the first processor, virtual payment card data associated with the virtual payment card from the second processor.

12. Method of any one of claims 7 to 11, further comprising:
detecting, by the first application (114), a merchant identifier associated with the page; and
sending the merchant identifier to the second processor.

13. Method of claim 12, wherein the user data comprises payment information associated with the merchant identifier.

14. Method of claim 13, wherein the payment information comprises a virtual payment card number and an expiration date.

15. Method of any one of claims 7 to 14, wherein the user identification data comprises facial recognition data.
